**Europäisches Patentamt**

**European Patent Office**

**Office européen des brevets**

(11) Publication number: **0 291 338**
**A2**

# EUROPEAN PATENT APPLICATION

(21) Application number: **88304372.1**

(22) Date of filing: **13.05.88**

(51) Int. Cl.⁴: **H 01 B 3/00**

(30) Priority: **15.05.87 GB 8711542**

(43) Date of publication of application:
**17.11.88 Bulletin 88/46**

(84) Designated Contracting States: **DE FR IT**

(71) Applicant: **The General Electric Company, p.l.c.**
**1 Stanhope Gate**
**London W1A 1EH (GB)**

(72) Inventor: **Byatt, Dennis William George**
**Causeway House Great Baddow**
**Chelmsford Essex (GB)**

(74) Representative: **Cockayne, Gillian**
**The General Electric Company plc Central Patent Dept.**
**(Chelmsford Office) Marconi Research Centre West**
**Hanningfield Road**
**Gt Baddow, Essex CM2 8HN (GB)**

(54) Electro-rheological fluid materials.

(57) An electro-rheological fluid material comprises fluid which itself acts as the active material and which may be liquid crystal material (e.g. type E7). A quantity of dry microscopic glass bubbles may be suspended within the fluid, the majority of the bubbles having diameters between 20 and 120 microns and wall thicknesses of between 0.5 and 2 microns.

FIG.2.

## Description

## ELECTRO-RHEOLOGICAL FLUID MATERIALS

This invention relates to electro-rheological fluid materials, that is to say, fluid materials which exhibit an apparent change of viscosity when subject to the influence of an electric field, and arrangements utilising such materials.

Conventional electro-rheological fluid material essentially comprise a fluid carrier medium in which are suspended particles of solid material. In operation the viscosity of the fluid material may be quite low, so as to flow readily, until subjected to the influence of a relatively high voltage electric field whereupon the apparent viscosity increases considerably so as to increase the resistance of the liquid to shear stress.

A typical electro-rheological fluid material as at present known consists of a light oil (e.g. transformer oil) having suspended therein finely divided solid material (e.g. plastic) with a small quantity of water. Whilst the underlying mechanism is not presently well understood, it is believed that the water effectively coats the particles of solid material and, in electro-rheological fluid materials as at present known, plays an important part in the operation.

With an electro-rheological fluid material as described above there is a tendency for the suspended material to separate out. This may be overcome by providing means for ensuring that the fluid is kept in motion, for example, by pumping or agitation. The necessity to include a quantity of water within the composition of the fluid material presents a more serious problem since not only does this provide a possible cause of deterioration of the fluid itself, but also a possible source of corrosion and an increase in the electrical conductivity of the fluid material. In certain control systems, the last-mentioned may represent a very serious problem indeed.

The present invention seeks to provide an improved electro-rheological fluid material and arrangements utilising the same in which one or more of the above problems are avoided or mitigated.

According to a first aspect of the invention, there is provided an electro-rheological fluid material in which the fluid comprises the active material. The fluid itself exhibits an effect without the necessity of including a suspension of solid material. It is preferred that the fluid material comprises liquid crystal material.

According to a second aspect of the invention an electro-rheological fluid comprises liquid crystal material.

A liquid crystal material presently preferred is that known as "E7".

Suspended within the fluid may be particles of an electrically insulating material, this enhancing its electral-rheological effect.

The electrically insulating material may be non-conductive glass. Glass is of course a dielectric material and other dielectric material may be suitable.

The electrically insulating material may be provided in the form of hollow particles, for example microscopic glass bubbles. In one example said microscopic glass bubbles are in the form of an aggregate having a size range in which the majority of bubbles have diameters between 20 and 100 microns and wall thicknesses of between 0.5 and 2 microns.

The insulating material may substantially alone be suspended in the fluid. However, it may be that satisfactorily low electronical conductance with an improved response time may be achieved by including with said insulating material, semiconductor material, and more particularly organic semiconductor materials, for example in substantially equal parts by volume.

Some ways in which the invention may be performed are now described by way of example with reference to the accompanying drawings in which:

Figure 1 illustrates in a highly schematic manner and by a section, part of a simple control system utilising an electro-rheological fluid material in accordance with the present invention; and

Figure 2 similarly illustrates part of a printed circuit board test apparatus utilising an electro-rheological fluid material in accordance with the present invention.

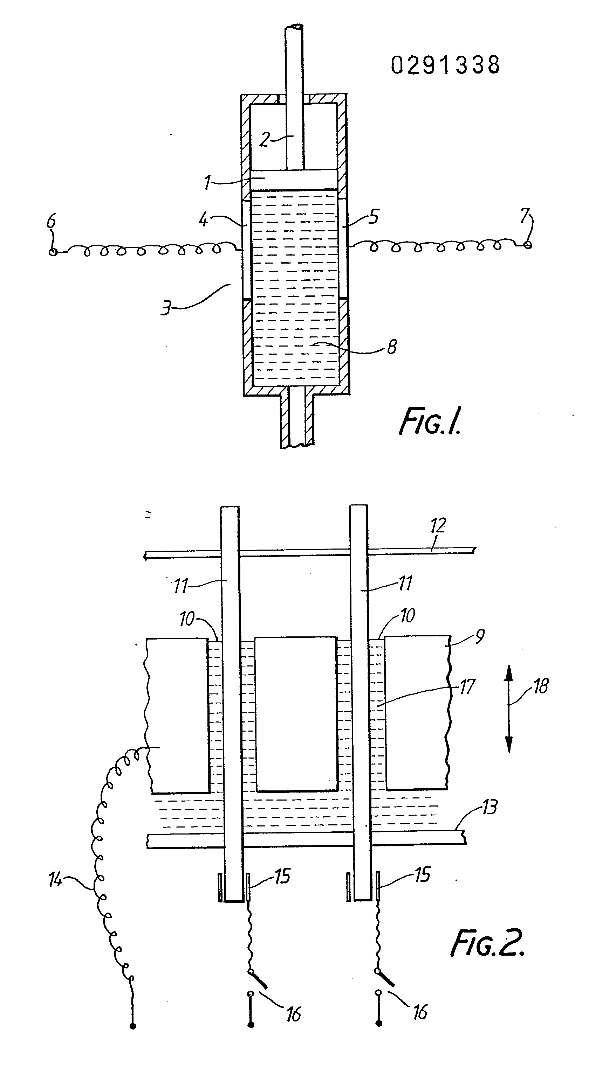

Referring to Figure 1, the mechanical components of the arrangement comprise a piston 1 connected to drive a rod 2, which in turn may be connected to actuate a mechanism (not shown). The piston 1 moves within a cylinder 3 of which the wall is formed in part by two opposing electrodes 4 and 5. Apart from the electrodes 4 and 5, the cylinder 3 is of electrically insulating material. The electrodes 4 and 5 are connected to terminals 6 and 7 across which may be applied a high d.c. voltage, in this case of the order of 6kV.

Piston 1 is moved, as known per se, by compressing a fluid 8 within the cylinder 3. The fluid 8 is an electro-rheological fluid material in accordance with the present invention and consists of E7 liquid crystal material.

As is known per se E7 liquid crystal material available, for example, from BDH Limited of Poole, England, is a biphenyl-based room temperature nematic mixture having the following characteristics:-

Viscosity 39.0 cSt
20°C
Dielectric Permittivities
$\varepsilon_1 = 5.38$
$\varepsilon_{11} = 19.05$ (i.e. when switched)
$\Delta\varepsilon = 13.67$
Elastic constants
$K_{11}$ 11.1 x $10^{-12}$N
$K_{22}$ 17.1 x $10^{-12}$N
$K_{33}$ 1.54 x $10^{-12}$N

E7 liquid crystal material is slightly hydroscopic. In order to drive off water, the material is placed in a vacuum (of the order of 0.1 torr) and heated before use to provide a liquid of high electrical resistance and of homogeneous nature, not likely to separate into constituent parts.

The distance separating the two electrodes 4 and 5 is of the order of 2mm, in this particular example.

When the piston 1 is moved to its desired position as illustrated, with the electrodes 4 and 5 unenergised and thus the viscosity of the fluid relatively low and relatively free flowing, the electrodes 4 and 5 are energised by applying a d.c. voltage of the order of 6kV to the terminals 6 and 7. This establishes an electric field between the electrodes 4 and 5 which causes the visocosity of the liquid 8 to increase markedly. The shear strength of the liquid between electrodes 4 and 5 with the field established approaches that of a solid and the piston 1 is thus held in position until the field is removed.

The piston may be returned to its original position by gravity or by means such as a spring (not shown), as known per se.

In a modification dry microscopic glass bubbles of which the majority have diameters between 20 and 120 microns and wall thicknesses of between 0.5 and 2 microns are suspended within said liquid 8.

Referring to Figure 2, the printed circuit board test apparatus illustrated comprises a metal block 9 which is connected to a mechanical drive (not shown). At desired points, the block 9 is bored through with 2mm diameter holes 10 to form a number of 2mm diameter cylinders. Individual push rods 11, of diameter 1mm, are supported concentrically within each cylinder by bearing plates 4,5. Each push rod 11 is connected to actuate a different mechanism (not shown).

The bearing plates 12,13 are of electrically insulating material whilst the push rods 11 and cylinders 10 are of electrically conductive metal. Thus the push rods 11 and cylinders 10 form opposing electrodes which are connected across a high d.c. voltage source, in this case of about 1kV.

Every cylinder 10 is connected to one side of the d.c. supply source by a single connection 14, made to the metal block 9. The push rods 11 are individually connected to the other side of the d.c. supply via slip rings 15 and electrical switches 16.

The gap between each push rod and its associated cylinder wall is 0.5mm and is filled with an electro-rheological fluid material 17 in accordance with this present invention. In this case the electro-rheological fluid material 17 comprises, as with the embodiment described with reference to Figure 1, E7 liquid crystal material in which is suspended a quantity of dry microscopic glass bubbles of which the majority have diameters of between 20 and 120 microns and wall thicknesses of between 0.5 and 2 microns. The liquid crystal material is dried before use by heating in a vacuum (of the order of 0.1 torr).

Without any voltage being applied, that is to say with all of the electrical switches 16 open, the viscosity of the fluid is such that the forces acting upon the push rods 11 by the movement, represented by double-headed arrow 18, of the cylinder block 9 are insufficient to overcome the bearing friction. The application of the high potential across a push rod cylinder pair by the closing of the appropriate electrical switch 16 increases the ability of the fluid contained in the respective cylinder 10 to withstand shearing forces to such an extent that the respective push rod 11 becomes mechanically attached to the metal block and will follow its movements to actuate the aforementioned respective mechanism to which the push rod is connected.

## Claims

1. An electro-rheological fluid material in which the fluid comprises the active material.

2. An electro-rheological fluid material as claimed in claim 1 and comprising liquid crystal material.

3. An electro-rheological fluid material comprising liquid crystal material.

4. An electro-rheological fluid as claimed in claim 2 or 3 and comprising E7 liquid crystal material.

5. An electro-rheological fluid material as claimed in any preceding claim wherein particles of an electrically insulating material are suspended within the fluid.

6. An electro-rheological fluid material as claimed in claim 5 wherein said electrically insulating material is non-conductive glass.

7. An electro-rheological fluid material as claimed in claim 5 or 6 wherein said electrically insulating material is provided in the form of hollow particles.

8. An electro-rheological fluid material as claimed in claim 7 and wherein said hollow particles are microscopic glass bubbles.

9. An electro-rheological fluid as claimed in claim 8 wherein said microscopic glass bubbles are in the form of an aggregate having a size range in which the majority of bubbles have diameters between 20 and 100 microns and wall thicknesses of between 0.5 and 2 microns.

10. An electro-rheological fluid material as claimed in any of claims 5 to 9 and wherein said insulating material is substantially alone suspended in the fluid.

11. An electro-rheological fluid material as claimed in any of the claims 5 to 9 wherein semiconductor material is included with said insulating material in said suspension.

12. An electro-rheological fluid material as claimed in claim 11 and wherein said semiconductor material is included with said insulating material in said suspension in substantially equal parts by volume.

13. A control or actuating apparatus including electro-rheological fluid material as claimed in any preceding claim.

14. An apparatus as claimed in claim 13 and comprising a printed circuit board test apparatus.

*Fig.1.*

*Fig.2.*